# EUROPÄISCHE PATENTSCHRIFT

(11) **EP 2 358 980 B1**
(45) Veröffentlichungstag und Bekanntmachung des Hinweises auf die Patenterteilung: **25.03.2015**
(21) Anmeldenummer: 09753047.1
(22) Anmeldetag: 13.11.2009
(51) Int. Cl.: F01L 1/047

(54) **VERSTELLBARE NOCKENWELLENANORDNUNG**
ADJUSTABLE CAMSHAFT ARRANGEMENT
ENSEMBLE ARBRE A CAMES REGLABLE

(30) Priorität: 12.12.2008 DE 102008062041
(43) Veröffentlichungstag der Anmeldung: 24.08.2011
(73) Patentinhaber: Thyssenkrupp Presta Teccenter Ag, 9492 Eschen (LI)
(72) Erfinder: MEUSEL, Jürgen, 09573 Dittmannsdorf (DE); MANN, Bernd, 09405 Zschopau (DE); LUPEI, Anton, 09437 Börnichen (DE); PAUL, Daniel, 09235 Burkhardtsdorf (DE); GROSSGEBAUER, Uwe, 01069 Dresden (DE); LINDNER, Mario, 09116 Chemnitz (DE)
(74) Vertreter: Fleuchaus, Michael A.
(86) Internationale Anmeldenummer: PCT/EP2009/008102
(87) Internationale Veröffentlichungsnummer: WO 2010/066328

(56) Entgegenhaltungen:
- EP-A1- 1 362 986
- EP-A1- 1 696 107
- DE-A1-102004 056 191
- DE-A1-102005 062 208
- GB-A- 2 424 257

## Beschreibung

Die Erfindung betrifft eine Nockenwellenanordnung für einen Antrieb, insbesondere für einen Kraftfahrzeugmotor. Die Nockenwellenanordnung umfasst zwei koaxial ineinander angeordnete Wellen, wobei eine hohle Außenwelle und eine Innenwelle relativ zueinander verdrehbar angeordnet sind. Beide Wellen tragen jeweils mehrere Nocken, wobei die von der Außenwelle getragenen Außenwellen-Nocken drehfest an der Außenwelle angebracht sind, während die von der Innenwelle getragenen Innenwellen-Nocken drehfest an der Innenwelle angebracht sind. Werden Innenwelle und Außenwelle gegeneinander verdreht, erfolgt eine Verstellung der Nocken zueinander.

Solche verstellbaren Nockenwellenanordnungen finden zunehmend bei ventilgesteuerten Verbrennungsmotoren zur gezielten Beeinflussung der Steuerzeiten der Ventile des Motors hinsichtlich der Leistungs- und Drehmomententfaltung, des Kraftstoffverbrauchs und der Abgasemission Anwendung. Bei diesen Nockenwellenanordnungen handelt es sich beispielsweise um gebaute Nockenwellensysteme mit einer Außenwelle und einer koaxial darin angeordneten Innenwelle. Die beiden Wellen sind mittels einer Verstelleinrichtung relativ zueinander verdrehbar. Auf der Außenwelle sind wechselweise fest mit der Außenwelle verbundene und um die Außenwelle drehbar gelagerte Nockenelemente angeordnet. Die drehbar gelagerten Nockenelemente sind dabei fest an der Innenwelle angebracht, jedoch um einen definierten Umfangswinkel relativ zur Außenwelle verdrehbar. Dies wird beispielsweise dadurch erreicht, dass die Innenwellen-Nockenelemente über ein Verbindungselement fest mit der Innenwelle verbunden sind, wobei dieses Verbindungselement mit Spiel durch eine Ausnehmung in der Außenwelle ragt, welche die Verdrehung der Innenwelle und damit der Innenwellen-Nocken um den definierten Umfangswinkel ermöglicht.

Die Verdrehung der Innenwelle zur Außenwelle erfolgt beispielsweise mittels eines Phasenverstellers, der eine Verstellung der mit der Außenwelle fest verbundenen Außenwellen-Nocken zu den mit der Innenwelle fest verbundenen Innenwellen-Nocken oder umgekehrt ermöglicht, um so beispielsweise eine Phasenverschiebung der Ventilsteuerzeiten zu erreichen oder die Öffnungsdauer der Ventile variieren zu können.

Um eine feste Verbindung zwischen der Innenwelle und den zugehörigen Innenwellen-Nockenelementen herzustellen, besitzen diese Nocken und die Innenwelle üblicherweise Bohrungen, in welche entsprechende Verbindungselemente eingebracht werden. Dabei kann es sich um Stifte, Bolzen oder Schrauben handeln. Die Nockenelemente können entsprechend ausgeführt sein, um die Einbringung eines Verbindungselementes zu ermöglichen.

Beispielsweise offenbart die deutsche Offenlegungsschrift DE 197 57 504 A1 dazu eine Nockenwelle mit einem solchen Verbindungselement in Form eines Zylinderstiftes. Der Zylinderstift wird mit Presssitz in eine Durchgangsbohrung in der Innenwelle und mit Spielpassung in den zugehörigen Nocken eingefügt. Der Nocken weist dazu einen nach außen stehenden zylindrischen Bereich auf, in dem sich eine Bohrung befindet, in welche der Zylinderstift eingebracht ist. Durch den zylindrischen Bereich soll die Bohrung von der Kontaktfläche des Nockens weg verlegt werden, um so eine ununterbrochene Kontaktfläche des Nockens mit der Außenwelle zu erreichen.

Ferner ist aus der deutschen Offenlegungsschrift DE 10 2005 004 976 A1 eine Nockenwelle mit gegeneinander verdrehbaren Nocken bekannt, bei der ein Verbindungselement zweiteilig ausgeführt ist. Ein erster Teil des Verbindungselementes ist hohl und ragt in eine radiale Bohrung in der Innenwelle hinein. Ein zweites Verbindungsteil wird von der anderen Seite so in das hohle erste Verbindungsteil eingebracht, dass es sich aufweitet und ein Festsitz hergestellt wird. Die beiden Verbindungsteile können beispielsweise auch als Schraube mit komplementärer Gewindebohrung ausgeführt sein.

Auch aus der europäischen Patentschrift EP 1 362 986 B1 ist die Montage einer verstellbaren Nockenwellenanordnung bekannt, bei der ein hohler Kupplungsstift mit enger Passung in eine Bohrung sowohl in Innen- und Außenwelle als auch in einen Nocken geführt wird. Der Außendurchmesser des Kupplungsstifts wird anschließend durch Einbringen eines Innenstifts vergrößert, um eine Presspassung herzustellen.

Die deutsche Patentschrift DE 28 22 147 C3 offenbart ferner eine Nockenwellenanordnung, bei der die Verbindung zwischen Innenwelle und Nocken über einen Mitnehmer erfolgt, der mit einer Schraube an der Innenwelle befestigt ist. Die Außenweile weist eine Ausnehmung zum Durchtritt des Mitnehmers auf. Der Mitnehmer ragt ferner in eine innere Nut hinein, die sich am Fügedurchmesser des zugehörigen Nockens befindet. Der Nocken wird mit der Nut von der Seite auf den Mitnehmer geschoben und rechts und links mit Ringen in seiner axialen Lage gesichert.

Dokument DE 10 2005 062208 A1 offenbart eine Nockenwelle mit um die Nockenwellenachse über begrenzte Umfangswinkel gegeneinander verdrehbaren Nocken, bei der koaxial ineinander eine Innenwelle und eine Außenwelle angeordnet sind, wobei mittels einer Fixiereinrichtung jeweils einer der Nocken fest mit der Innenwelle und der andere fest mit der Außenwelle verbinden ist. Die mit der Innenwelle verbundenen Nocken weisen eine Durchgangsbohrung auf, welche bei montiertem Nocken mit jeweils einer zugeordneten Durchgangsbohrung der Innenwelle fluchtet. Die Fixiereinrichtung ist bezüglich ihrer axialen Längserstreckung aus zwei im Wesentlichen baugleichen Fixierstiften gebildet.

Dokumente GB 2 424 257 und EP 1696 107 A1, offenbaren Nockenwellenaufbauten, die eine innere Wellen und ein die innere Welle umgebendes und relativ zu ihr drehbares äußeres Rohr umfassen. Auf dem äußeren Rohr sind zwei Gruppen von Nocken montiert, wobei die erste Gruppe von Nocken fest mit dem äußeren Rohr dreht, und die zweite Gruppe drehbar auf der äußeren Oberfläche des Rohrs montiert ist und von der inneren Welle mittels Stiften angetrieben wird, die mit Spiel durch sich entlang des Umfangs erstreckende Schlitze in dem äußeren Rohr reichen. Auf dem äußeren Rohr ist eine Hülse drehbar montiert, wobei diese Hülse mittels eines Stifts, der mit Spiel durch einen sich in dem äußeren Rohr am Umfang entlang erstreckenden Schlitz reicht, einen Antrieb zu der inneren Welle vermittelt.

Wird die Verbindung zwischen den Innenwellen-Nocken und der Innenwelle aufgrund der Nockenwellen-Wechselbelastung als feste Verbindung ausgelegt, wird zweckmäßigerweise ein Presssitz der verwendeten Verbindungselemente sowohl in Nocken als auch in der Innenwelle verwendet. Dies hat insbesondere bei den bekannten Verbindungselementen mit konstantem Querschnitt den Nachteil, dass der für die Erzielung des Presssitzes erforderliche Querschnitt des Verbindungselementes über mehrere Bauteilbohrungen in Nocken und Innenwelle gefügt werden muss. Dadurch kann eine undefinierte Beeinflussung der Pressüberdeckung und damit der Sicherheit der Pressverbindung eintreten. Insbesondere können derartige Fügeverbindungen eine nicht ausreichende Verbindungsfestigkeit aufweisen. Auch können durch das gegenseitige Verpressen der Komponenten auf Block Deformationen entstehen und der Verlust der Konzentrizität auftreten.

Aufgabe der Erfindung ist es daher, eine gebaute Nockenwellenanordnung bereitzustellen, die einfach zu fügen ist und eine sichere und ausreichende Festigkeit aufweisende Verbindung zwischen Innenwelle und Innenwellen-Nocken bietet. Insbesondere sollen durch die Erfindung - bei Gewährleistung einer möglichst einfachen Montage - die erforderliche Nockenfestigkeit sowie eine hohe axiale Abpresssicherheit der Innenwellennocken gewährleistet werden und bei der Montage der Nockenwellenanordnung eine Verformung der Innenwelle vermieden werden.

Erfindungsgemäß wird diese Aufgabe durch eine Nockenwellenanordnung mit den Merkmalen des unabhängigen Anspruches 1 gelöst. Vorteilhafte Weiterbildungen der Nockenwellenanordnung ergeben sich aus den Unteransprüchen 2-17.

Die Nockenwellenanordnung gemäß dem Oberbegriff des Anspruchs 1 zeichnet sich erfindungsgemäß dadurch aus, dass zumindest zwei Verbindungselemente zur Anbringung eines jeden Innenwellen-Nocken auf der Innenwelle vorgesehen sind. Dabei ist das eine Verbindungselement derart in eine Aufnahme in der Innenwelle eingebracht, dass ein Teil des Verbindungselementes aus der Aufnahme herausragt, wobei der herausragende Teil wenigstens teilweise in eine Aussparung eingebracht ist, welche sich am Fügedurchmesser des jeweiligen Innenwellen-Nockens befindet. Dabei ist diese Aussparung wenigstens zu einer Stirnseite des Innenwellen-Nockens hin offen ausgebildet, und der herausragende Teil weist zumindest zwei gegenüberliegende Seitenflächen auf, welche mit Festsitz an zwei entsprechenden Innenflächen der Aussparung des jeweiligen Innenwellen-Nockens anliegen. Ferner ist das weitere Verbindungselement in Form eines so genannten, insbesondere kopffrei ausgebildeten, Radialstiftes ausgeführt. Dabei ist der Radialstift im montierten Zustand der Anordnung bereichsweise durch eine radiale Durchgangsöffnung (insbesondere Bohrung) des Innenwellen-Nockenelements sowie eine Aufnahme der Innenwelle geführt und in zumindest einem der beiden Teile (mit Vorteil in beiden Teilen) mittels Festsitz (mit sog. (Maß-)Überdeckung) gehalten.

In einer besonders bevorzugten Ausführungsform der Erfindung ragt das eine bzw. erste (nockenerhebunsseitige), insbesondere in Form eines Passfederstiftes ausgebildete, Verbindungselement über eine Länge von zirka zwei Drittel des Innenwellendurchmessers in die Innenwelle hinein, während das weitere bzw. zweite (grundkreisseitige) und in Form eines kopffreien Passfederstiftes ausgebildete Verbindungselement über eine Länge von zirka einem Drittel in die Innenwelle hineinragt. Dabei sind bevorzugter Weise sowohl das erste als auch das zweite Verbindungselement in die Innenwelle eingepresst (Fest- bzw. Presssitz). Insbesondere ist dabei die Überdeckung der Presspassung des zweiten Verbindungselementes (Radialstift) etwas geringer ausgelegt (geringere Maßüberdeckung) als die Überdeckung der Presspassung(en) des ersten Verbindungselementes (Passfederstift). Da das erste Verbindungselement (mit höherer Einpresskraft) in die Innenwelle eingepresst wird bevor der bewegliche Nocken gefügt wird und der Einpressvorgang des zweiten Verbindungselementes mit im Vergleich zum ersten Einpressvorgang reduzierter Einpresskraft und reduzierter Einpresstiefe erfolgt, kann hierdurch eine Verformung der Innenwelle aufgrund des Einpressvorganges des Radialstiftes - mit Verlust der Konzentrizität der Außenwelle - vermieden werden. Während des Einpressvorgangs des ersten Verbindungselementes kann die Innenwelle auf der Gegenseite durch die Ausnehmung der Außenwelle hindurch abgestützt werden.

In einer möglichen Ausführungsform der Erfindung ist das erste Verbindungselement eine Passfeder, und die Aufnahme in der Innenwelle ist als Passfeder-Aufnahme ausgebildet.

In einer anderen möglichen Ausführungsform der Erfindung weist das erste Verbindungselement einen Schaft und ein Kopfteil auf, wobei der Schaft in eine Aufnahme in der Innenwelle eingebracht ist, während das Kopfteil wenigstens teilweise in eine Aussparung eingebracht ist, welche sich am Fügedurchmesser des jeweiligen Innenwellen-Nockens befindet. Dabei ist diese Aussparung wenigstens zu einer Stirnseite des Innenwellen-Nockens hin offen ausgebildet, und das Kopfteil weist zumindest zwei gegenüberliegende Seitenflächen auf, welche mit Festsitz an zwei entsprechenden Innenflächen der Aussparung des jeweiligen Innenwellen-Nockens anliegen. Durch die zur Stirnseite des Innenwellen-Nockens hin offen ausgebildete Aussparung kann der Innenwellen-Nocken auf das Kopfteil des Verbindungselementes parallel zur Nockenwellenlängsachse aufgepresst werden. Auf diese Weise beeinflussen sich die beiden Festsitze Schaft/Innenwelle und Kopfteil/Innenwellen-Nocken nicht gegenseitig und beide Festsitze können sicher und mit ausreichender Verbindungsfestigkeit ausgebildet werden.

Das Verbindungselement kann einen Schaft und ein Kopfteil aufweisen, wobei der Schaft mit einem Festsitz in die Aufnahme eingebracht ist, während das Kopfteil zumindest ein Bestandteil des herausragenden Teils des Verbindungselementes ist.

In einem Ausführungsbeispiel der Erfindung befindet sich das Kopfteil des Verbindungselementes vollständig außerhalb der Außenwelle. Alternativ kann sich ein Kopfteil jedoch auch nur teilweise in der Aussparung in dem jeweiligen Innenwellen-Nocken und teilweise in der Ausnehmung in der Außenwelle befinden.

Ferner kann sich das Kopfteil auch teilweise in der Aufnahme in der Innenwelle befinden, sich durch die Ausnehmung in der Außenwelle erstrecken und dann in die Aussparung in dem Innenwellen-Nocken ragen. In diesem Fall kann die Innenwelle als Aufnahme eine gestufte Bohrung aufweisen, in die das Kopfteil des Verbindungselements teilweise hineinragt, während der untere Bereich der Bohrung den Schaft des Verbindungselements aufnimmt. Diese Stufenbohrung ist beispielsweise als eine abgesetzte zylindrische Bohrung mit zwei Durchmessern ausgeführt. Der größere, außen angeordnete Durchmesser nimmt einen Teil des Kopfteils des Verbindungselements auf. Der in diesem erweiterten Teil der Stufenbohrung angeordnete Abschnitt des Kopfteils ist an den Durchmesser des erweiterten Bereiches der Stufenbohrung angepasst, so dass ein zylindrisches Kopfteil in diesem Bereich einen größeren Querschnitt aufweist. Dadurch wird die Belastung des Verbindungselements in diesem kritischen Bereich verringert, da sich durch die Querschnittserhöhung die wirksame Spannung verringert. Auch wird die Flächenpressung im Kontaktbereich zwischen Innenwelle und Kopfteil in dem erweiterten Bereich der Stufenbohrung deutlich reduziert.

Alternativ zu einer Stufenbohrung kann als Aufnahme in der Innenwelle auch eine gestufte Ausnehmung vorgesehen sein. Im Unterschied zu einer Stufenbohrung mit wenigstens zwei zylindrischen Abschnitten mit unterschiedlichen Durchmessern weist diese gestufte Ausnehmung einen zylindrischen Abschnitt, in dem der Schaft des Verbindungselements mit Festsitz angeordnet ist, und einen nicht-zylindrischen Abschnitt, der das nicht-zylindrische Kopfteil aufnimmt, auf. Durch die nicht-zylindrische Form wird vorteilhaft erreicht, dass eine lagegenaue Ausrichtung des Kopfteils relativ zur Längsachse der Nockenwellenanordnung ermöglicht wird, so dass der Innenwellen-Nocken exakt axial in der richtigen Sollposition gefügt werden kann. Gleichzeitig kann der Schaft des Verbindungselements zylindrisch sein und auf einfache Weise in den zylindrischen Abschnitt der gestuften Ausnehmung eingeführt werden. Ist der nicht-zylindrische Abschnitt der gestuften Ausnehmung so ausgebildet, dass der Querschnitt dieses Abschnitts größer ist als der des zylindrischen Abschnitts, werden zusätzlich zu dem Vorteil der exakten Ausrichtung des Kopfteils des Verbindungselements auch noch die vorstehend zu der Stufenbohrung erwähnten Vorteile bezüglich einer Verringerung der Spannungen im kritischen Bauteilbereich und einer Verringerung der Flächenpressung im Kontaktbereich zwischen Innenwelle und Kopfteil erreicht.

Ein Innenwellen-Nocken wird erfindungsgemäß durch zwei, insbesondere diametral gegenüberliegende Verbindungselemente derart mit der Innenwelle verbunden, dass eine Drehmomentübertragung gewährleistet ist. Dabei können die Schäfte von zwei Verbindungselementen in eine gemeinsame Aufnahme (z.B. Durchgangsbohrung) in der Innenwelle eingebracht sein. In einer besonders bevorzugten Ausführungsform der Erfindung ist das eine Verbindungselement, wie vorstehend beschrieben, als so genannter Passfederstift (mit Schaft und Kopfteil) und das weitere Verbindungselement als so genannter Radialstift ausgebildet. Über den Radialstift kann der bereits über den Passfederstift mit der Innenwelle drehfest verbundene Innenwellen-Nocken zusätzlich befestigt werden. Hierfür wird der Radialstift auf der Grundkreisseite (Seitenbereich ohne Nockenerhebung) des Innenwellen-Nocken durch eine radiale Durchgangsöffnung in eine Aufnahme des Innenwellen-Nocken geführt und in zumindest einem der beiden Überschneidungsbereiche (Radialstift/Innenwellen-Nocken, Radialstift/Innenwelle) - vorzugsweise in beiden Überschneidungsbereichen - durch einen Fest- bzw. Presssitz fixiert. Dabei sind die hieraus resultierenden Einpresslängen von erstem und zweitem Verbindungselement unterschiedlich. Mit Vorteil beträgt das Verhältnis der Einpresstiefen erstes Verbindungselement zu zweitem Verbindungselement zirka zwei zu eins (2:1).

Vorzugsweise erstreckt sich die Ausnehmung zum Durchtritt des Verbindungselementes durch die Außenwelle so über einen Teil des Umfangs der Außenwelle, dass eine Bewegung des Verbindungselementes und damit der Innenwelle relativ zur Außenwelle um einen Verstellwinkel α möglich ist.

Das Kopfteil eines Verbindungselementes kann rechtwinklig zu dem Schaftteil des Verbindungselementes ausgeformt sein. Ferner können die beiden Seitenflächen des Kopfteils und die beiden Innenflächen der Aussparung jeweils parallel oder konisch zueinander verlaufen, um das Einschieben des Verbindungsteils in die Aussparung bzw. das Aufschieben des Innenwellen-Nocken auf das Kopfteil zu erleichtern und einen Presssitz zu erzeugen. Die beiden Seitenflächen des Kopfteils und/oder die beiden Innenflächen der Aussparung in dem Innenwellen-Nocken können ferner eine profilierte Oberfläche aufweisen. Vorteilhaft ist die Ausgestaltung des Kopfteils des ersten Verbindungselementes mit Einführfasen. Hierdurch wird ein verbessertes axiales Fügen des Nockens erreicht. Dabei sollte während des Fügevorgangs des Nockens das bereits vorgefügte (bzw. bereits eingepresste) Verbindungselement (Passstift) entgegen der Fügerichtung abgestützt werden.

Die Aussparung im Innenwellen-Nocken kann bei beiden Ausführungsformen des einen bzw. ersten Verbindungselements (Passfeder und Passfederstift) als eine sich über die gesamte Breite des Innenwellen-Nockens erstreckende Nut ausgebildet sein. Dabei befindet sich diese Aussparung vorzugsweise mittig unterhalb der Erhebung des Innenwellen-Nockens, und das Verbindungselement ist vorzugsweise als ein einstückiges Bauteil ausgeformt.

Ein Vorteil der ersten Ausführungsform, bei der als erstes Verbindungselement eine Passfeder eingesetzt wird, liegt darin, dass Passfedern kostengünstige Massenbauteile sind, die jederzeit verfügbar sind. Die Passfeder-Verbindungstechnik wird fertigungstechnisch gut beherrscht. Ferner kann die gesamte Nockenbreite, d.h. die Nockendicke in axialer Richtung, des Innenwellen-Nockens für die Ausbildung des Presssitzes zwischen Passfeder und Innenwellen-Nocken ausgenutzt werden, wodurch eine besonders große Fügefläche für die Ausbildung der Pressverbindung zwischen Innenwellen-Nocken und Verbindungselement zur Verfügung gestellt wird. Dies bewirkt eine besonders feste Verbindung, wodurch wiederum die radiale Bauhöhe des Innenwellen-Nockens minimiert werden kann, was eine Bauraum- und Gewichtseinsparung ermöglicht. Diese Ausführungsform der erfindungsgemäßen Nockenwellenanordnung mit Passfeder kann somit insbesondere vorteilhaft bei kleineren PKW-Nockenwellen eingesetzt werden.

Ein weiterer Vorteil der erfindungsgemäßen Nockenwellenanordnung liegt darin, dass der Querschnitt des Verbindungselementes für den erforderlichen Festsitz der Verbindung zwischen Verbindungselement und Innenwelle bzw. zwischen Verbindungselement und Innenwellen-Nocken nicht über das gesamte Verbindungselement gefügt werden muss. Vielmehr wird über den Querschnitt des Schaftes ein Festsitz für die Verbindung zwischen Verbindungselement und Innenwelle und getrennt davon über die Seitenflächen des Kopfteils ein Festsitz für die Verbindung zwischen Verbindungselement und Innenwellennocken gefügt. Dies führt zu einer erhöhten Sicherheit der jeweiligen Festsitze.

Ferner ist ein Innenwellennocken auf einfache Weise mit der Innenwelle zu verbinden, indem zuerst das eine bzw. erste Verbindungselement in die Innenwelle eingebracht wird, anschließend der Innenwellen-Nocken daraufhin axial auf das Kopfteil des Verbindungselementes geschoben wird, und abschließend das als Radialstift ausgeführte weitere bzw. zweite Verbindungselement durch die Durchgangsöffnung des Innenwellen-Nockenelements in die Aufnahme der Innenwelle gepresst wird, wobei es mit Vorteil sowohl mit der Innenwelle als auch mit dem Innenwellen-Nockenelement einen Festsitz bildet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel der erfindungsgemäßen Nockenwellenanordnung in perspektivischer Ansicht;
- Fig. 2: ein Ausführungsbeispiel der erfindungsgemäßen Nockenwellenanordnung gemäß Figur 1 im Längsschnitt;
- Fig. 3: einen Querschnitt durch ein Ausführungsbeispiel der erfindungsgemäßen Nockenwellenanordnung gemäß Figur 1;
- Fig. 4: einen Querschnitt durch ein Ausführungsbeispiel der erfindungsgemäßen Nockenwellenanordnung, bei der eine Verdrehung der Innenwelle zur Außenwelle erfolgt ist;
- Fig. 5: einen Querschnitt durch ein Ausführungsbeispiel der erfindungsgemäßen Nockenwellenanordnung mit einem Bereich des Kopfteils des Verbindungselementes innerhalb der Ausnehmung in der Außenwelle;
- Fig. 6: ein Ausführungsbeispiel der erfindungsgemäßen Nockenwellenanordnung mit einer Passfeder; und
- Fig. 7: einen Querschnitt durch ein Ausführungsbeispiel der erfindungsgemäßen Nockenwellenanordnung mit Passfeder.

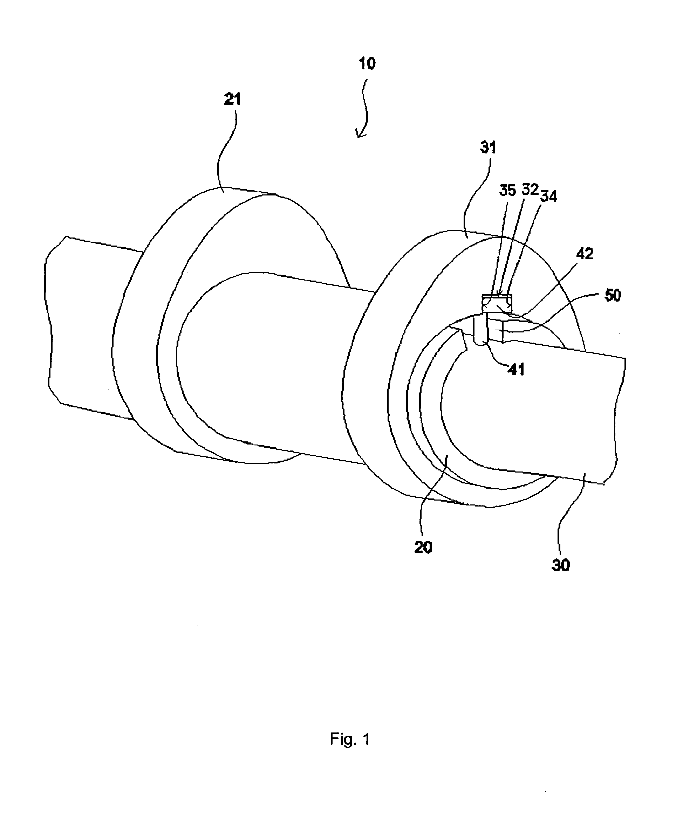

In Fig. 1 ist schematisch ein Ausführungsbeispiel einer gattungsgemäßen Nockenwellenanordnung 10 dargestellt, bei der eine Innenwelle 30 koaxial in einer Außenwelle 20 angeordnet ist, wobei die Wellenkörper verkürzt dargestellt sind. Die beiden Wellen können durch ebenfalls nicht dargestellte Lagerungen verdrehbar zueinander gelagert sein. Die Verstellung der beiden Wellen zueinander um einen Verdrehwinkel α kann beispielsweise durch eine ebenfalls nicht dargestellte Verstelleinrichtung in Form eines Phasenverstellers erfolgen. Die Innenwelle kann als Voll- oder Hohlwelle ausgeführt sein, wobei in dem Ausführungsbeispiel der Figuren eine Vollwelle gewählt wurde.

Auf der Außenfläche der Außenwelle 20 sind drehfest mehrere Außenwellen-Nocken 21 angebracht. Die Anbringung dieser Außenwellen-Nockenelemente kann auf bekannte Weise beispielsweise durch Aufschrumpfen erfolgen, wobei ein Presssitz erzeugt wird. Dazu wird der Fügedurchmesser des Nockens so gewählt, dass er bei Umgebungstemperatur um eine bestimmte "Überdeckung" geringer als der Außendurchmesser der Außenwelle ist. Wird das Nockenelement erwärmt, weitet sich der Innendurchmesser auf und das Nockenelement kann auf die Außenwelle aufgefädelt und positioniert werden. Dabei kann ferner vorgesehen sein, dass die Oberfläche der Außenwelle im Bereich des Nockens zuvor bearbeitet bzw. behandelt wird. Beispielsweise kann eine Profilierung vorgesehen werden. Ferner kann die Außenwelle zusätzlich gekühlt werden, um so eine Verringerung des Durchmessers der Außenwelle zu erreichen. Auch Zwischenelemente wie Buchsen können gegebenenfalls zwischen Außenwelle und dem jeweiligen Nockenelement vorgesehen werden. Beim Abkühlen des Nockenelementes erfolgt ein Aufschrumpfen des Nockens auf der Welle, wobei die Überdeckung eine Bewegung des Nockens auf der Außenwelle verhindert.

Alternativ zu einem solchen Aufschrumpfen der Nockenelemente können für die drehfeste Anbringung der Nocken 21 auf der Außenwelle 20 jedoch jegliche geeignete Verfahren eingesetzt werden. Beispielsweise können die Außenwellen-Nocken auf die Außenwelle geschweißt werden, oder in den Bereichen, in denen die Nocken angebracht werden sollen, werden durch rollende Bearbeitungswerkzeuge mehrere durch Materialverdrängung erzeugte Wülste oder Stege geschaffen. Die Nocken sind beispielsweise mit einer angefasten Innenausnehmung versehen und werden mit dieser Ausnehmung über die Wülste geschoben. Diese werden dabei im äußeren Bereich verformt und somit in die Ausnehmung gequetscht, wodurch der Nocken form- und kraftschlüssig auf der Außenwelle gehalten wird.

Die Außenwelle 20 trägt ferner mehrere Innenwellen-Nocken 31, die verdrehbar auf der Außenwelle gelagert sind, jedoch drehfest mit der Innenwelle 30 verbunden sind. Zwischen dem Innendurchmesser der Innenwellen-Nockenelemente 31 und dem Außendurchmesser der Außenwelle 20 ist somit ein geringes (Lager-)Spiel vorgesehen, um ein Drehen der Innenwellen-Nocken 31 um die Längsachse der Nockenwellenanordnung zu ermöglichen.

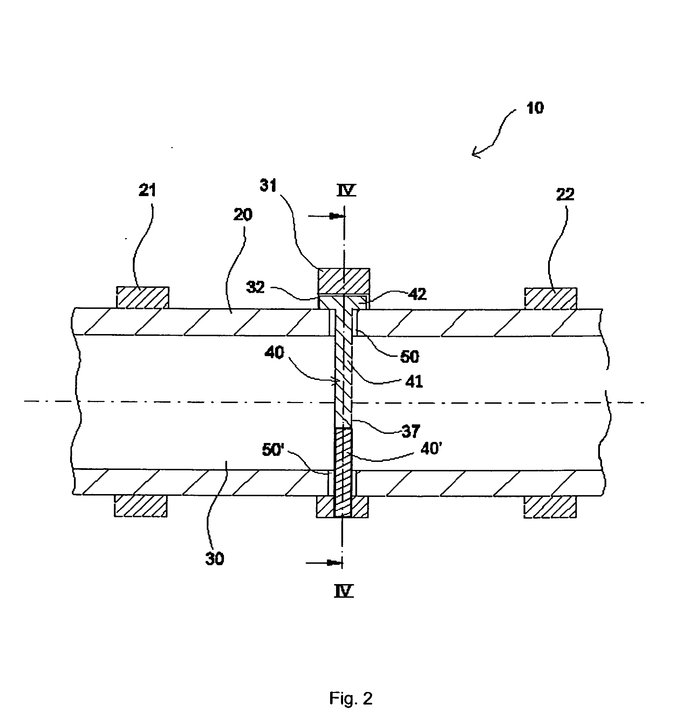

Erfindungsgemäß sind die Innenwellen-Nocken 31 fest über zumindest zwei stiftförmige Verbindungselemente 40, 40' mit der Innenwelle 30 verbunden, wie es schematisch in den Fig. 1 bzw. Fig. 2 dargestellt ist. Das eine bzw. erste Verbindungselement 40 ist mit Vorteil als Passfederstift mit einem Schaft 41 und einem Kopfteil 42 ausgeführt, während das zweite Verbindungselement 40' als so genannter kopffreier Radialstift ausgeführt ist.

Der Schaft 41 des ersten Verbindungselementes 40 ist mit Presssitz in eine Bohrung in der Innenwelle 30 eingefügt, während das Kopfteil 42 mit Presssitz in eine Nut 32 im Innenwellen-Nockenelement 31 eingefügt ist. Zwischen der Bohrung und dem Schaft 41, beziehungsweise zwischen der Nut 32 und dem Kopfteil 42 liegt eine entsprechende maßliche Überdeckung vor, um einen Festsitz zu gewährleisten. Die Form des Kopfteils 42 ist an die Form der Nut 32 angepasst bzw. umgekehrt. Beide Festsitze sind voneinander unabhängig.

Das Verbindungselement bestehend aus Schaft 41 und Kopfteil 42 ist vorzugsweise einstückig ausgeformt. Ein Schaftteil 41 und ein Kopfteil 42 können jedoch auch zu einem zweistückigen Verbindungselement zusammengefügt werden. Diese Verbindung kann beispielsweise über eine Schraub- oder Stiftverbindung erfolgen. Der Schaft 41 kann einen kreisförmigen, rechteckigen oder anderen geometrischen Schaftquerschnitt aufweisen, der an den Querschnitt der zugehörigen Aufnahme in der Innenwelle 30 angepasst ist. Dabei hat ein runder Schaftquerschnitt beispielsweise den Vorteil, dass der Schaft 41 und die zugehörige Bohrung 37 in der Innenwelle 30 einfacher gefertigt werden können als bei anderen Schaftquerschnitten. Da die Lage des Kopfteils 42 in Bezug auf die Nut 32 im Innenwellen-Nocken 31 ausgerichtet werden muss, haben rechteckige oder anders geformte Schaftquerschnitte jedoch den Vorteil, dass eine definierte Ausrichtung des Kopfteils 42 eines Verbindungselementes bereits beim Einfügen des Schaftes in die Innenwelle 30 erfolgen kann.

Das Kopfteil 42 ist vorzugsweise rechtwinklig zu dem Schaft 41 ausgeformt und kann beispielsweise quaderförmig sein. Das Verbindungselement 40 wird somit vorzugsweise durch das Kopfteil nach oben hin vergrößert. Es kann jedoch auch vorgesehen sein, dass das Kopfteil kleiner ist als der Schaft und beispielsweise als Quader auf der oberen Fläche eines Stiftes angebracht ist. In jedem Fall weist das Kopfteil 42 dabei stets wenigstens zwei Seitenflächen 43 und 44 auf, welche parallel oder konisch zueinander verlaufen. Diese Seitenflächen 43 und 44 des Kopfteils 42 können eine Profilierung aufweisen. Die Seitenflächen 43 und 44 des Kopfteils 42 des Verbindungselementes 40 liegen mit Festsitz an den Innenflächen 34 und 35 der Nut 32 an, um so eine feste Verbindung herzustellen.

In dem in den Figuren dargestellten Ausführungsbeispiel der Erfindung, bei dem das erste Verbindungselement 40 einen Schaft und ein Kopfteil aufweist, weist der Schaft 41 einen runden Querschnitt auf, während das rechtwinklig zu diesem Stift ausgeformte Kopfteil 42 quaderförmig ist und auf dem Schaftende aufsitzt. Der Schaft 41 des Verbindungselementes 40 ist im montierten Zustand der gebauten Nockenwellenanordnung 10 in eine vorzugsweise radiale Aufnahme 37 in der Innenwelle 30 eingebracht. Bei dieser Aufnahme 37 handelt es sich beispielsweise um eine runde Bohrung (Sackloch- oder Durchgangsbohrung), die radial in das Material der Innenwelle 30 eingebracht ist. Der runde Schaft 41 des Verbindungselementes 40 ist vorzugsweise mit Presssitz in diese Bohrung 37 eingefügt.

In der Außenwelle 20 ist für jedes der beiden Verbindungselemente 40, 40' eine Ausnehmung 50, 50' vorgesehen, um ein Hindurchragen des jeweiligen Verbindungselementes 40, 40' von der Innenwelle 30 bis zum Innenwellen-Nockenelement 31 zu ermöglichen. Jedes Verbindungselement 40, 40' ist durch eine zugehörige Ausnehmung 50, 50' geführt, wobei beim ersten Verbindungselement 40 das Kopfteil 42 in eine Aussparung 32 am Fügedurchmesser des Innenwellen-Nockens 31 eingebracht und beim zweiten Verbindungselement 40' dieses bereichsweise in der Durchgangsöffnung 33 des Innenwellen-Nockenelementes 31 angeordnet ist. Bei der Aussparung 32 handelt es sich vorzugsweise um eine Nut, die in Richtung der Achse der Nockenwellenanordnung 10 verläuft und wenigstens zu einer Stirnfläche des Innenwellen-Nockens 31 hin offen ausgebildet ist. In dem in den Figuren dargestellten Ausführungsbeispiel ist eine einfacher zu fertigende durchgehende Nut 32 vorgesehen, die zwei parallele oder konisch zulaufende Innenflächen 34 und 35 aufweist. Diese Innenflächen können wie die Seitenflächen des Kopfteils 42 des Verbindungselementes 40 mit einer Profilierung versehen sein.

Den Ausführungsbeispielen ist zu entnehmen, dass sich die Nut 32 vorzugsweise mittig unterhalb der Erhebung 36 des Nockens 31 und die Durchgangsöffnung 33 diametral gegenüberliegend im Grundkreis des Innenwellen-Nockenelements 31 befindet. Sowohl die Nut 32 als auch die Durchgangsöffnung 33 kann jedoch auch versetzt zu der zuvor beschriebenen Position angeordnet sein, wenn die Materialstärke des Nockens dies erlaubt.

Zur Montage der Innenwellen-Nocken 31 wird der Schaft 41 des ersten Verbindungselements 40 (Passfederstift) mit Festsitz in die zugehörige beispielsweise als Bohrung ausgebildete Aufnahme 37 in der Innenwelle 30 eingefügt. Das zugehörige Kopfteil 42 wird so in Richtung der Nockenwellenachse ausgerichtet, dass ein Innenwellen-Nocken 31 auf die Außenwelle 20 gefädelt und mit seiner Nut 32 von der Seite auf das über die Außenwelle 20 hervorstehende Kopfteil 42 geschoben und mit Presssitz in die Nut 32 gefügt werden kann. Der mechanische Fügevorgang durch übliche Fügeverfahren wie dem Aufschrumpfen ergänzt werden kann. Verlaufen die Seitenflächen 43 und 44 des Kopfteils 42 und die Innenflächen 34 und 35 der Nut 32 konisch zueinander, wird der Innenwellen-Nocken 31 so über das Kopfteil geschoben, dass die Form des Kopfteils 40 deckungsgleich mit der Form der Nut 32 ist. Anschließend wird der bereits (vor-)fixierte Innenwellen-Nocken 31 weiter fixiert, indem das stiftförmige zweite Verbindungselement 40' (Radialstift) durch die Bohrung bzw. Durchgangsöffnung 33 in die Aufnahme 37, 37' der Innenwelle 30 eingepresst wird, wobei die maßliche Überdeckung für den Presssitz des Radialstiftes in der Innenwelle 30 geringer bemessen sein kann als die maßliche Überdeckung für den Presssitz des Passfederstiftes mit der Innenwelle 30.

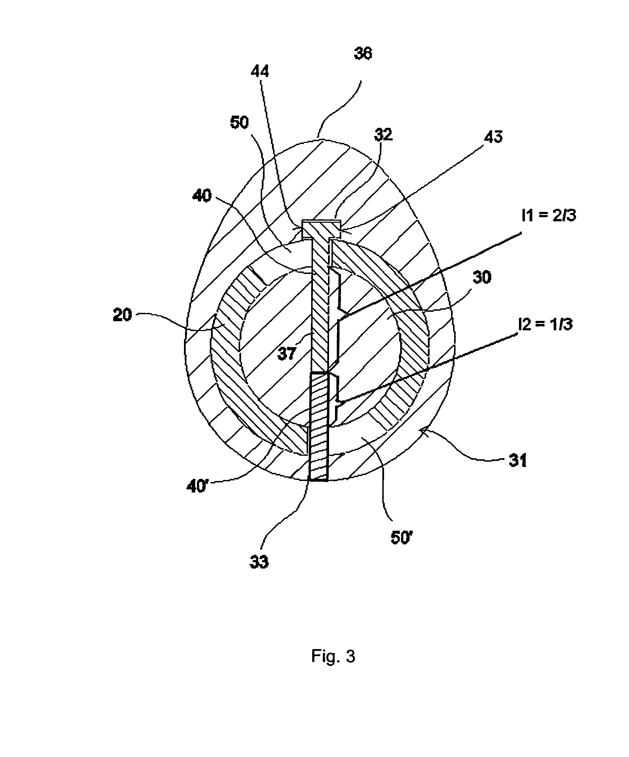

In Fig. 3 ist die erfindungsgemäße Anordnung gemäß Figur 1 noch einmal im Querschnitt dargestellt. Wie bereits in Figur 2 veranschaulicht sind die Überschneidungsbereiche der beiden Verbindungselemente 40, 40' mit der Innenwelle 30 (bzw. die jeweilige Länge über die das jeweilige Verbindungselement 40, 40' in die Innenwelle 30 eingeführt wird) bevorzugt unterschiedlich groß, wobei der Überschneidungsbereich des nockenseitigen Verbindungselementes 40 signifikant größer ist als der Überschneidungsbereich des weiteren Verbindungselementes 40'. Mit Vorteil beträgt das Verhältnis der Überschneidungen im Wesentlichen zwei zu eins (2:1).

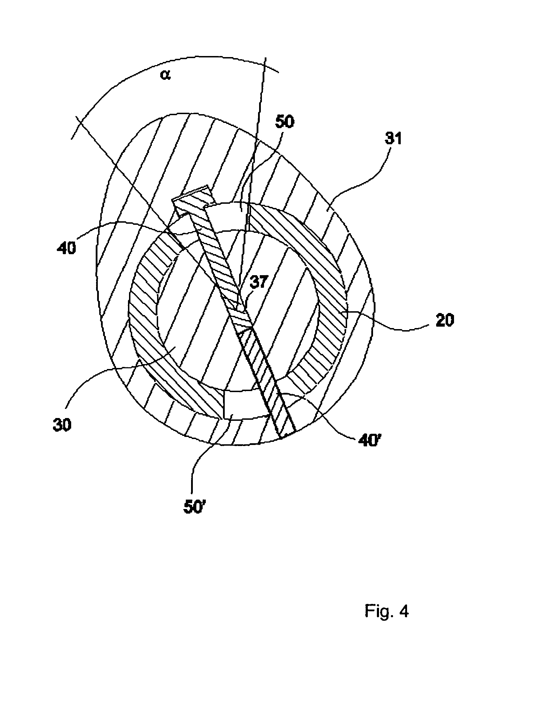

In der Fig. 4 ist eine Nockenwellen-Anordnung dargestellt, bei der eine Verdrehung der Innenwelle 30 relativ zur Außenwelle 20 erfolgt ist. Durch die Verbindungselemente 40 und 40' wird der zugehörige Innenwellen-Nocken 31 mitgenommen, so dass er sich um die Außenwelle 20 dreht, auf der er mit Spiel angebracht ist. Zwischen der Unterseite des Kopfteils 42 des Verbindungselementes 40 und der Außenfläche der Außenwelle liegt somit vorzugsweise ein definiertes Spiel vor. Die Unterseite des Kopfteils 42 kann an die äußere Kontur der Außenwelle 20 angepasst werden und beispielsweise leicht konkav gebogen ausgeführt werden.

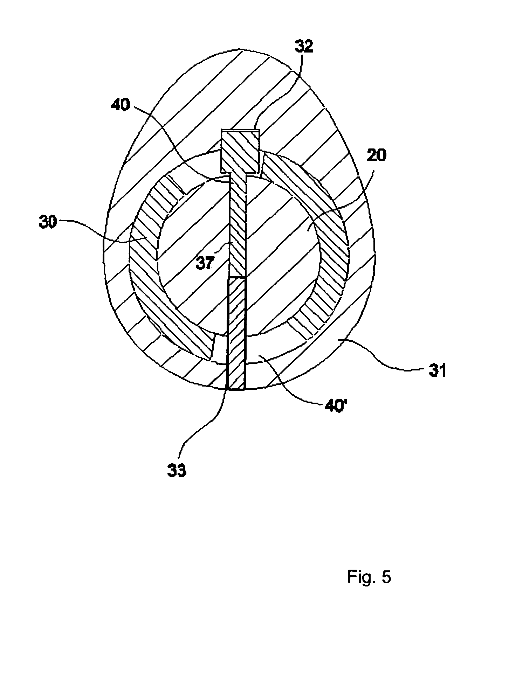

In einem weiteren möglichen Ausführungsbeispiel, das beispielhaft in Fig. 5 dargestellt ist, befindet sich das Kopfteil 42 des Verbindungselementes 40 nicht vollständig außerhalb der Außenwelle, sondern ist teilweise in der Ausnehmung 50 innerhalb der Außenwelle angeordnet. Diese Ausführungsform hat beispielsweise den Vorteil, dass kein definiertes Spiel zwischen der Unterseite des Kopfteils und der Außenfläche der Außenwelle eingestellt werden muss. Das Verbindungselement 40 muss lediglich soweit in die Innenwelle 30 eingebracht werden, dass die Nut 32 eines Innenwellen-Nockenelementes 31 über den Bereich des Kopfteils 42 gefügt werden kann, der aus der Außenwelle 20 herausragt. Die in Fig. 5 dargestellte Bohrung 37 kann auch als Stufenbohrung ausgeführt sein, und das Kopfteil kann teilweise in die Stufenbohrung hineinragen. Diese Ausführungsform ist in Fig. 5 jedoch nicht dargestellt.

Alternativ zu den in den Figuren dargestellten Ausführungsformen der Erfindung kann ein Verbindungselement 40, 40' auch durch einen Verbindungsstift mit viereckigem Querschnitt gebildet werden, dessen Querschnittsform sich über die Länge nicht verändert. Der Stift weist dabei einen unteren Schaftbereich auf, der in eine Ausnehmung in der Innenwelle 30 eingebracht wird. Die Maße des oberen Kopfbereiches sind so gewählt, dass die Nut 32 eines Innenwellen-Nockens 31 von der Seite über den Kopfbereich geschoben werden kann. Zwischen zwei gegenüberliegenden Innenflächen der Nut und den entsprechenden Seitenflächen des Kopfbereichs des Verbindungsstiftes wird ebenfalls ein Festsitz eingestellt, was durch eine geeignete maßliche Überdeckung zwischen der Nut des Innenwellen-Nockens und dem Kopfbereich gewährleistet werden kann. In dieser Ausführungsform können die Seitenflächen des Verbindungselementes im Kopfbereich mit einer Profilierung versehen sein, um den Festsitz mit dem Innenwellen-Nockenelement 31 zu verbessern.

Die Bildung des ersten Verbindungselementes aus einem Schaft und einem rechtwinklig dazu ausgeformten Kopfteil kann jedoch vorteilhafter sein, da die Form und die Abmessungen des Schafts so gewählt werden können, dass dieser auf einfache Weise in eine Ausnehmung in der Innenwelle eingebracht werden kann, während die Form und die Abmessungen des Kopfteils an die Anforderungen zur Aufnahme in der Nut eines Innenwellen-Nockens angepasst werden können. Für den Schaft kann somit eine andere Form vorteilhaft sein als für das Kopfteil eines Verbindungselementes.

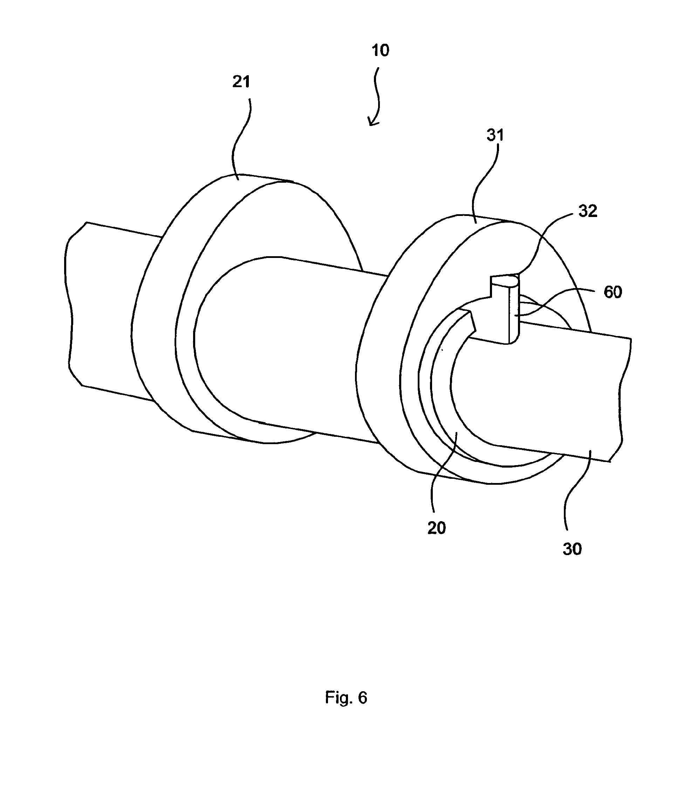

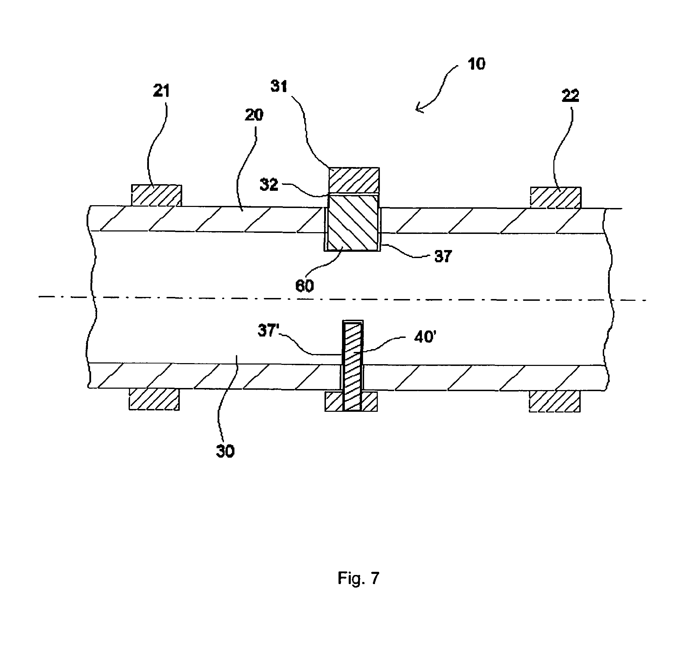

Ein weiteres Ausführungsbeispiel der Erfindung ist in Fig. 6 und Fig. 7 dargestellt, bei dem das nockenseitige Verbindungselement 40 als Passfeder 60 ausgebildet ist, die in eine Passfedernut in der Innenwelle 30 eingebracht ist. Die Seitenflächen der Passfeder 60 liegen ebenfalls mit Festsitz an den seitlichen Innenflächen der Nut 32 in dem Innenwellen-Nocken 31 an. Die Passfeder 60 erstreckt sich dabei wenigstens über die gesamte Länge der Nut 32. Die Seitenflächen der Passfeder können parallel oder konisch zueinander verlaufen. Ferner können diese Seitenflächen der Passfeder 60 profiliert ausgeführt sein. Das zweite Verbindungselement 40' ist auch hier als eingepresster Radialstift ausgeführt.

### Bezugszeichenliste:

- 10: Nockenwellenanordnung, Nockenwellensystem
- 20: Außenwelle
- 21,22: Außenwellen-Nocken, Außenwellen-Nockenelement
- 30: Innenwelle
- 31: Innenwellen-Nocken, Innenwellen-Nockenelement
- 32: Aussparung Nut in Innenwellen-Nockenelement
- 33: Durchgangsöffnung in Innenwellen-Nockenelement
- 34,35: Innenflächen Nut
- 36: Nockenerhebung
- 37,37': Aufnahme, Bohrung in Innenwelle, Passfedemut
- 40,40': Verbindungselement
- 41,41': Schaft, Schaftbereich
- 42,42': Kopfteil, Kopfbereich
- 43,44: Seitenflächen eines Kopfteils, Kopfbereiches
- 50,50': Ausnehmung in Außenwelle
- 60,61: Passfeder

- α: Umfangswinkel, Verstellwinkel

## Patentansprüche

1. Nockenwellenanordnung für einen Antrieb, insbesondere für einen Kraftfahrzeugmotor, umfassend zwei koaxial ineinander angeordnete Wellen (20, 30), bei der eine hohle Außenwelle (20) und eine Innenwelle (30) relativ zueinander verdrehbar angeordnet sind und beide Wellen (20,30) jeweils zumindest einen Nocken (21, 22, 31) tragen, wobei die von der Außenwelle (20) getragenen Außenwellen-Nocken (21, 22) drehfest an der Außenwelle (20) angebracht sind, während die von der Innenwelle (30) getragenen Innenwellen-Nocken (31) drehfest über jeweils wenigstens ein Verbindungselement (40,40', 60) an der Innenwelle (30) angebracht sind, wobei das Verbindungselement (40;40') mit Spiel durch eine Ausnehmung (50, 50') in der Außenwelle (20) ragt und an dem jeweiligen Innenwellen-Nocken (31) befestigt ist, der verdrehbar auf der Außenwelle (20) gelagert ist, wobei
die Innenwellen-Nocken (31) über jeweils zwei Verbindungselemente (40, 40') an der Innenwelle (30) angebracht sind, und
das erste Verbindungselement (40) derart in eine Aufnahme (37) in der Innenwelle (30) eingebracht ist, dass ein Teil (42) des Verbindungselementes (40;40';60) aus der Aufnahme (37) herausragt, und der herausragende Teil (42) wenigstens teilweise in eine Aussparung (32) eingebracht ist, welche sich am Fügedurchmesser des jeweiligen Innenwellen-Nockens (31) befindet, und
das zweite Verbindungselement (40') in Form eines Radialstiftes ausgeführt ist, welcher zumindest bereichsweise sowohl in einer Durchgangsöffnung (33) des Innenwellen-Nockenelements (31) als auch in einer Aufnahme (37') der Innenwelle (30) angeordnet und in der Durchgangsöffnung (33) und/oder der Aufnahme (37') durch Festsitz gehalten ist, und
wobei sich die Ausnehmung (50, 50') zum Durchtritt des Verbindungselementes (40, 40') durch die Außenwelle (20) derart über einen Teil des Umfangs der Außenwelle (20) erstreckt, dass eine Bewegung des Verbindungselementes (40, 40') und damit der Innenwelle (30) relativ zur Außenwelle (20) um einen Verstellwinkel α möglich ist,
**dadurch gekennzeichnet, dass**
die Aussparung (32) wenigstens zu einer Stirnseite des Innenwellen- Nockens (31) hin offen ausgebildet ist, und
dass der herausragende Teil (42) zumindest zwei gegenüberliegende Seitenflächen (43;44) aufweist, welche mit Festsitz an zwei entsprechenden Innenflächen (34;35) der Aussparung (32) des jeweiligen Innenwellen-Nockens (31) anliegen.

2. Nockenwellenanordnung nach Anspruch 1,
**dadurch gekennzeichnet, dass**
das zweite Verbindungselement (40') diametral gegenüberliegend zu dem ersten Verbindungselement (40) angeordnet ist.

3. Nockenwellenanordnung nach einem der vorstehenden Ansprüche,
**dadurch gekennzeichnet, dass**
die Innenwelle (30) eine gemeinsame Aufnahme (37) für die zwei Verbindungselemente (40,40') aufweist.

4. Nockenwellenanordnung nach Anspruch 3,
**dadurch gekennzeichnet, dass**
die gemeinsame Aufnahme (37) als Durchgangsbohrung der Innenwelle (30) ausgeführt ist.

5. Nockenwellenanordnung nach Anspruch 4,
das erste Verbindungselement (40) eine größere Überdeckung mit der gemeinsamen Aufnahme (37) aufweist als das zweite Verbindungselement (40').

6. Nockenwellenanordnung nach einem der vorstehenden Ansprüche,
**dadurch gekennzeichnet, dass**
das erste Verbindungselement (40) über eine größere Einpresslänge (11, 12) in der gemeinsamen Aufnahme (37) angeordnet ist als das zweite Verbindungselement (40'), und insbesondere das Verhältnis der unterschiedlichen Einpresslängen (11 , 12) in etwa zwei zu eins beträgt.

7. Nockenwellenanordnung nach einem der vorstehenden Ansprüche,
**dadurch gekennzeichnet, dass**
die Durchgangsöffnung (33) als Bohrung ausgebildet ist.

8. Nockenwellenanordnung nach einem der vorstehenden Ansprüche,
**dadurch gekennzeichnet, dass**
das eine Verbindungselement (40) einen Schaft (41) und ein Kopfteil (42) aufweist, wobei der Schaft (41) in eine Aufnahme (37) in der Innenwelle (30) eingebracht ist, während das Kopfteil (42) wenigstens teilweise in eine Aussparung (32) eingebracht ist, welche sich am Fügedurchmesser des jeweiligen Innenwellen-Nockens (31) befindet, wobei diese Aussparung (32) wenigstens zu einer Stirnseite des Innenwellen-Nockens (31) hin offen ausgebildet ist, und dass das Kopfteil (42) zumindest zwei gegenüberliegende Seitenflächen (43, 44) aufweist, welche mit Festsitz an zwei entsprechenden Innenflächen (34, 35) der Aussparung (32) des jeweiligen Innenwellen-Nockens (31) anliegen.

9. Nockenwellenanordnung nach einem der vorstehenden Ansprüche,
**dadurch gekennzeichnet, dass**
das eine Verbindungselement (40,40') einen Schaft (41) und ein Kopfteil (42) aufweist, wobei der Schaft (41) mit einem Festsitz in die Aufnahme (37) eingebracht ist, und das Kopfteil (42) Bestandteil des herausragenden Teils (42) des Verbindungselementes (40,40') ist.

10. Nockenwellenanordnung nach einem der Ansprüche 8 oder 9,
**dadurch gekennzeichnet, dass**
sich das Kopfteil (42) des Verbindungselementes (40,40') vollständig außerhalb der Außenwelle (20) befindet.

11. Nockenwellenanordnung nach einem der Ansprüche 8 oder 9,
**dadurch gekennzeichnet, dass**
sich das Kopfteil (42) teilweise in der Aussparung (32) in dem jeweiligen Innenwellen-Nocken (31) und teilweise in der Ausnehmung (50, 50') in der Außenwelle (20) befindet.

12. Nockenwellenanordnung nach Anspruch 11,
**dadurch gekennzeichnet, dass**
die Innenwelle (30) eine gestufte Bohrung aufweist, wobei das Kopfteil (42) teilweise in die gestufte Bohrung hineinragt.

13. Nockenwellenanordnung nach einem der Ansprüche 8 bis 12,
**dadurch gekennzeichnet, dass**
das Kopfteil (42) rechtwinklig zu dem Schaftteil (41) des Verbindungselementes (40, 40') ausgeformt ist.

14. Nockenwellenanordnung nach einem der Ansprüche 8 bis 13,
**dadurch gekennzeichnet, dass**
die beiden Seitenflächen (43,44) des Kopfteils (42) und die beiden Innenflächen (34, 35) der Aussparung (32) jeweils parallel oder konisch zueinander verlaufen.

15. Nockenwellenanordnung nach einem der Ansprüche 8 bis 14,
**dadurch gekennzeichnet, dass**
die beiden Seitenflächen (43,44) des Kopfteils (42) und/oder die beiden Innenflächen (34, 35) der Aussparung (32) in dem Innenwellen-Nocken (31) eine profilierte Oberfläche aufweisen.

16. Nockenwellenanordnung nach einem der Ansprüche 8 bis 15,
**dadurch gekennzeichnet, dass**
die Aussparung (32) als eine sich über die gesamte Breite des Innenwellen-Nockens (31) erstreckende Nut ausgebildet ist.

17. Nockenwellenanordnung nach einem der Ansprüche 8 bis 16,
**dadurch gekennzeichnet, dass**
sich die Aussparung (32) radial mittig unterhalb der Erhebung (36) des Innenwellen-Nockens (31) befindet.

## Claims

1. A camshaft arrangement for a drive, in particular for a motor vehicle engine, comprising two shafts(20, 30) arranged coaxially one inside the other, in which a hollow outershaft (20) and an innershaft (30) are arranged so as to be rotatable relative to one another and both shafts (20, 30) support in each case at least one cam (21,22,31), the outer-shaft cams (21,22) supported by the outer shaft (20) being attached to the outer shaft (20) for conjoint rotation therewith while the inner-shaft cams (31) supported by the innershaft (30) are in each case attached to the inner shaft (30) for conjoint rotation therewith by means of at least one connecting element (40,40', 60), the connecting element (40; 40') protruding with play through a recess (50, 50') in the outer shaft (20) and being attached to the respective Inner-shaft cam (31), which is supported on the outer shaft (20) so as to be rotatable thereon, wherein
the inner-shaft cams (31) are in each case attached to the Inner shaft (30) by two connecting elements (40, 40'), and
the first connecting element (40) is inserted Into a receptacle (37) in the inner shaft (30) in such a way that a part (42) of the connecting element (40; 40'; 60) protrudes from the receptacle (37), and the protruding part (42) is inserted at least partially into a cutout (32) situated on the joining diameter of the respective inner-shaft cam (31), and
the second connecting element (40') is designed in the form of a radial pin which is arranged at least in regions both in a passage opening (33) of the inner-shaft cam element (31) and in a receptacle (37') of the inner shaft (30) and is held with an interference fit In the passage opening (33) and/or the receptacle (37'), and
wherein the recess (50, 50') for passing the connecting element (40, 40') through the outer shaft (20) extends over a part of the periphery of the outer shaft (20) in such a way as to allow movement of the connecting element (40, 40') and thus the inner shaft (30) relative to the outer shaft (20) by a displacement angle a,
**characterized in that**
the cutout (32) Is formed so as to be open at least toward one end side of the inner-shaft cam (31), and
the protruding part (42) has at least two opposite side surfaces (43;44) which bear with an interference fit against two corresponding Inner surfaces (34; 35) of the cutout (32) of the respective inner-shaft cam (31).

2. The camshaft arrangement as claimed in claim 1, **characterized in that** the second connecting element (40') is arranged diametrically opposite the first connecting element (40).

3. The camshaft arrangement as claimed in any preceding claim, **characterized in that** the innershaft (30) has a common receptacle (37) for the two connecting elements (40, 40').

4. The camshaft arrangement as claimed in claim 3, **characterized in that** the common receptacle (37) is designed as a passage bore of the inner shaft (30),

5. The camshaft arrangement as claimed in claim 4, **characterized in that**
the first connecting element (40) overlaps the common receptacle (37) to a greater extent than the second connecting element (40').

6. The camshaft arrangement as claimed In any preceding claim,
**characterized in that**
the first connecting element (40) is arranged in the common receptacle (37) over a greater pressed-in length (11, 12) than the second connecting element (40'), and in particular the ratio of the different pressed-In lengths (11,12) is approximately two to one.

7. The camshaft arrangement as claimed in any preceding claim,
**characterized in that**
the passage opening (33) is formed as a bore.

8. The camshaft arrangement as claimed any preceding claim,
**characterized in that**
one connecting element (40) has a shank (41) and a head part (42), the shank (41) being inserted into a receptacle (37) in the inner shaft (30) while the head part (42) is inserted at least partially into a cutout (32) situated on the joining diameter of the respective innershaft cam (31), said cutout (32) being formed so as to be open at least toward one end side of the inner-shaft cam (31), and **in that** the head part (42) has at least two opposite side surfaces (43, 44) which bear with an interference fit against two corresponding inner surfaces (34, 35) of the cutout (32) of the respective inner-shaft cam (31).

9. The camshaft arrangement as claimed in any preceding claim,
**characterized in that**
one connecting element (40,40') has a shank (41) and a head part (42), the shank (41) being inserted with an interference fit into the receptacle (37) and the head part (42) being a constituent part of the protruding part (42) of the connecting element (40,40').

10. The camshaft arrangement as claimed In either of claims 8 or 9,
**characterized in that**
the head part (42) of the connecting element (40, 40') is situated entirely outside the outer shaft (20),

11. The camshaft arrangement as claimed in either of claims 8 or 9,
**characterized in that**
the head part (42) is situated partially in the cutout (32) In the respective inner-shaft cam (31) and partially In the recess (50, 50') in the outer shaft (20).

12. The camshaft arrangement as claimed in claim 11,
**characterized in that**
the inner shaft (30) has a stepped bore, the head part (42) projecting partially into the stepped bore.

13. The camshaft arrangement as claimed in any of claims 8 to 12,
**characterized in that**
the head part (42) is formed at right angles to the shank part (41) of the connecting element (40, 40'),

14. The camshaft arrangement as claimed in any of claims 8 to 13,
**characterized in that**
the two side surfaces (43, 44) of the head part (42) and the two inner surfaces (34, 35) of the cutout (32) run in each case parallel to one another or conically with respect to one another.

15. The camshaft arrangement as claimed in any of claims 8 to 14,
**characterized in that**
the two side surfaces (43, 44) of the head part (42) and/or the two Inner surfaces (34, 35) of the cutout (32) in the inner-shaft cam (31) have a profiled surface.

16. The camshaft arrangement as claimed in any of claims 8 to 15,
**characterized in that**
the cutout (32) is formed as a groove which extends over the entire width of the inner-shaft cam (31).

17. The camshaft arrangement as claimed any of claims 8 to 16,
**characterized in that**
the cutout (32) is situated radially centrally below the elevation (36) of the inner-shaft cam (31).

## Revendications

1. Disposition d'arbre à cames destinée à une transmission, notamment pour un moteur de véhicule automobile, comprenant deux arbres disposés coaxialement l'un dans l'autre (20,30), pour lesquels un arbre extérieur creux (20) et un arbre intérieur (30) sont disposés de manière contournable l'un par rapport à l'autre et les deux arbres (20, 30) portent respectivement au moins une came (21, 22, 31), les cames d'arbre extérieur (21, 22) portées par l'arbre extérieur (20) étant disposées de manière résistante à la torsion sur l'arbre extérieur (20), tandis que les cames d'arbre intérieur (31) portées par l'arbre intérieur (30) sont disposées de manière résistance à la torsion respectivement sur un élément de raccordement (40, 40', 60) sur l'arbre intérieur (30), l'élément de raccordement (40 ; 40') faisant saillie avec du jeu à travers un creux (50, 50') dans l'arbre extérieur (20), et étant fixé sur la came d'arbre extérieur respective (31), qui est logée de manière rotative sur l'arbre extérieur (20),
les cames d'arbre intérieures (31) étant disposées via deux éléments de raccordement respectifs (40,40') sur l'arbre intérieur (30), et
le premier élément de raccordement (40) est inséré dans un réceptacle (37) dans l'arbre intérieur (30) de sorte qu'une partie (42) de l'élément de raccordement (40 ; 40' ; 60) fait saillie hors du réceptacle (37), et la partie en saillie (42) étant insérée au moins partiellement dans un évidement (32) qui se trouve sur le diamètre d'assemblage de la came respective d'arbre intérieur (31), et
le deuxième élément de raccordement (40') étant réalisé sous la forme d'une broche radiale, qui est disposée au moins par zone aussi bien dans un orifice de passage (33) de l'élément de came d'arbre intérieur (31) que dans un réceptacle (37') de l'arbre intérieur (30) et maintenu par un siège fixe dans l'orifice de passage (33) et/ou dans le réceptacle (37'), et
l'évidement (50, 50'), en vue de la traversée de l'élément de raccordement (40,40') par un arbre extérieur (20) s'étend sur une partie de la circonférence de l'arbre extérieur (20) de sorte qu'un mouvement de l'élément de raccordement (40,40') et par conséquent de l'arbre intérieur (30) est possible par rapport à l'arbre extérieur (20) à un angle de calage α,
**caractérisée en ce que**
l'évidement (32) est constitué de manière ouverte au moins vers un flan frontal de la came d'arbre intérieur (31), et
la partie en saillie (42) présente au moins deux surfaces latérales situées en face l'une de l'autre (43 ; 44), qui sont collées avec siège fixe sur deux surfaces intérieures correspondantes (34 ; 35) de l'évidement (32) de la came d'arbre intérieur (31).

2. Disposition d'arbre à cames selon la revendication 1,
**caractérisée en ce que**
le deuxième élément de raccordement (40') est disposé en position diamétrale en face du premier élément de raccordement (40).

3. Disposition d'arbre à cames selon une quelconque des revendications précédentes,
**caractérisée en ce que**
l'arbre intérieur (30) présente un réceptacle commun (37) pour les deux éléments de raccordement (40,40').

4. Disposition d'arbre à cames selon la revendication 3,
**caractérisée en ce que**
le réceptacle commun (37) est configuré comme trou de passage de l'arbre inférieur (30),

5. Disposition d'arbre à cames selon la revendication 4,
**caractérisée en ce que**
le premier élément de raccordement (40) présente un plus grand recouvrement avec le receptacle commun (37) que le deuxième élément de raccordement (40').

6. Disposition d'arbre à cames selon une quelconque des revendications précédentes,
**caractérisée en ce que**
le premier élément de raccordement (40) est disposé sur une plus grande longueur d'enfoncement (11, 12) dans le receptacle commun (37) que le deuxième élément de raccordement (40'), et notamment le rapport des différentes longueurs d'enfoncement (11, 12) est environ de deux à un.

7. Disposition d'arbre à cames selon une quelconque des revendications précédentes,
**caractérisée** en cc que
l'orifice de passage (33) est constitué comme perçage,

8. Disposition d'arbre à cames selon une quelconque des revendications précédentes,
**caractérisée en ce que**
l'un des éléments de raccordement (40) présente une tige (41) et une partie de tête (42), la tige (41) étant insérée dans un réceptacle (37) dans l'arbre intérieur (30), tandis que la partie de tête (42) est insérée au moins partiellement dans un évidement (32), qui se trouve sur le diamètre d'assemblage de la came d'arbre intérieur respective (31), cet évidement (32) étant constitué de manière ouverte au moins vers un flan frontal de la came d'arbre intérieur (31), et **en ce que** la partie de tête (42) présente au moins deux surfaces latérales en face l'une de l'autre (43,44), qui sont collées avec siège fixe sur deux surfaces intérieures correspondantes (34, 35) de l'évidement (32) de la came d'arbre intérieur respective (31),

9. Disposition d'arbre à cames selon une quelconque des revendications précédentes,
**caractérisée en ce que**
l'un des éléments de raccordement (40,40') présente une tige (41) et une partie de tête (42), la tige (41) étant insérée avec un siège fixe dans le réceptacle (37) et la partie de tête (42) formant partie intégrante de la partie en saillie (42) de l'élémen de raccordement (40, 40').

10. Disposition d'arbre à cames selon une quelconque des revendications 8 ou 9,
**caractérisée en ce que**
la partie de tête (42) de l'élément de raccordement (40, 40') se trouve entièrement en dehors de l'arbre extérieur (20).

11. Disposition d'arbre à cames selon une quelconque des revendications 8 ou 9,
**caractérisée en ce que**
la partie de tête (42) se trouve en partie dans l'évidement (32) dans la came d'arbre intérieur respective (31) et en partie dans le creux (50, 50') dans l'arbre extérieur (20).

12. Disposition d'arbre à cames selon la revendication 11,
**caractérisée en ce que**
l'arbre intérieur (30) présente un perçage étagé, la partie de tête (42) faisant en partie saillie dans le perçage étagé.

13. Disposition d'arbre à cames selon une quelconque des revendications 8 à 12,
**caractérisée en ce que**
la partie de tête (42) est formée à angle droit par rapport à la partie de tige (41) de l'élément de raccordement (40, 40').

14. Disposition d'arbre à cames selon une quelconque des revendications 8 à 13,
**caractérisée en ce que**
les deux surfaces latérales (43, 44) de la partie de tête (42) et les deux surfaces intérieures (34,35) de l'évidement (32) se produisent respectivement parallèlement ou cyniquement l'une à l'autre.

15. Disposition d'arbre à cames selon une quelconque des revendications 8 à 14,
**caractérisée en ce que**
les deux surfaces latérales (43,44) de la partie de tête (42) et/ou les deux surfaces intérieures (34, 35) de l'évidement (32) présentent une surface profilée dans la came d'arbre intérieur (31).

16. Disposition d'arbre à cames selon une quelconque des revendications 8 à 15,
**caractérisée en ce que**
l'évidement (32) est constitué comme une rainure s'étendant sur la largeur complète de la came d'arbre intérieur (31).

17. Disposition d'arbre à cames selon une quelconque des revendications 8 à 16,
**caractérisée en ce que**
l'évidemenr (32) se trouve en position centrée radialement au-dessous du bossage (36) de la came d'arbre intérieur (31).
